# EUROPEAN PATENT APPLICATION

(11) **EP 4 808 279 A1**
(43) Date of publication of application: **16.09.2026**
(21) Application number: 24888886.9
(22) Date of filing: 22.07.2024
(51) Int. Cl.: H05B 3/28, H05B 3/03, H05B 3/18, G03B 17/55, G03B 17/12, H04N 23/54

(54) **HEATING MEMBER AND CAMERA MODULE COMPRISING SAME**

(30) Priority: 10.11.2023 KR 20230155862; 26.03.2024 KR 20240041379
(71) Applicant: LG Innotek Co., Ltd., Seoul 07796 (KR)
(72) Inventor: KIM, Do Hyeon, Seoul 07796 (KR); CHO, In Hee, Seoul 07796 (KR); OH, Joon Jae, Seoul 07796 (KR)
(74) Representative: Plasseraud IP
(86) International application number: PCT/KR2024/010582
(87) International publication number: WO 2025/100690

(57) **Abstract**

This heating member comprises: a substrate; electrodes disposed on the substrate; a heating layer disposed on the substrate and connected to the electrodes, and comprising a polymer and conductive particles disposed in the polymer; and an adhesive protective layer disposed on the heating layer.

## Description

### [Technical Field]

The present embodiment relates to a heating member and a camera module comprising same.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

A camera may be equipped with a lens, a lens holder that accommodates the lens, an image sensor that converts an image of a subject collected in the lens into an electrical signal, and a printed circuit board on which the image sensor is mounted. A housing forming the outer appearance of the camera is formed with a structure in which the entire area is sealed to prevent internal components from being contaminated by foreign substances containing moisture.

In a case of a camera module, since it is disposed outside a vehicle and is greatly affected by outdoor air, frost, dew condensation, and freezing frequently occur on a lens in winter. When frost, dew condensation, and freezing occur on the lens, there is a problem that performance of the camera module is significantly deteriorated.

### [Detailed Description of the Invention]

### [Technical Subject]

The present embodiment is to provide a heating member and a camera module that can rapidly remove frost or freezing occurring on a surface of a lens through a heating function and can improve heating efficiency.

Also, it is to provide a heating member and a camera module capable of firmly coupling a substrate, an electrode, and a heating layer to each other through a protective layer.

### [Technical Solution]

The present embodiment relates to a heating member comprising: a substrate; electrodes disposed on the substrate; a heating layer disposed on the substrate and connected to the electrodes, and comprising a polymer and conductive particles disposed in the polymer; and an adhesive protective layer disposed on the heating layer.

The electrodes include a plurality of electrodes spaced apart in a horizontal direction, and the heating layer may include a heating layer upper portion disposed on the electrodes, and a heating layer lower portion protruding downward from a lower surface of the heating layer upper portion and disposed between the plurality of electrodes.

At least a portion of each of the plurality of electrodes may protrude from a side surface of the heating layer.

The protective layer may include an upper surface portion disposed on the heating layer, a central portion overlapping the heating layer upper portion in the horizontal direction, and a lower surface portion overlapping the electrode in the horizontal direction.

A thickness of the upper surface portion may be less than or equal to a sum of a thickness of the central portion and a thickness of the lower surface portion.

The electrode includes a first region overlapping the heating layer in an up-and-down direction, and a second region protruding from a side surface of the heating layer, and a radial length of the first region may be longer than a radial length of the second region.

A radial gap between the electrode and an inner side surface or an outer side surface of the substrate may be longer than the radial length of the second region.

A radial gap between the electrode and an inner side surface or an outer side surface of the substrate may be shorter than the radial length of the second region.

The heating layer may include a second heating layer lower portion protruding downward from a lower surface of the heating layer upper portion and disposed outside the plurality of electrodes.

The present embodiment relates to a camera module comprising: a first body; a lens module disposed in the first body and including a barrel and a lens disposed in the barrel; a substrate module disposed in the first body; and a heating member having one end connected to a surface of the lens and the other end connected to the substrate module to provide heat to the lens, wherein the heating member comprises: a substrate; an electrode disposed on the substrate; a heating layer disposed on the substrate and connected to the electrode, and including a polymer and conductive particles disposed in the polymer; and an adhesive protective layer disposed on the heating layer and coupled to the lens..

### [Advantageous Effects]

The present embodiment has an advantage that a heating layer, electrodes, and a substrate can be firmly coupled to each other through a single protective layer.

In addition, there is an advantage that coupling force with a lens can be stably achieved by adjusting flatness by an upper surface portion in the protective layer.

In addition, there is an advantage that electrical conductivity to the heating layer can be improved by increasing a contact area between the heating layer and the electrodes.

In addition, there is an advantage that a surface of the lens can be heated more uniformly by adjusting a distance between the lens and the heating layer.

In addition, there is an advantage that frost or freezing occurring on the surface of the lens can be rapidly removed through heat generated from the heating member.

In addition, by providing an adhesive function to the heating layer itself, since an adhesive layer for coupling between the heating member and the lens compared to the related art can be omitted, there is an advantage that heat can be more intensively provided to the lens. Accordingly, there is an advantage that heating efficiency can be improved by increasing the contact area between the heating layer and the lens.

### [Brief Description of Drawings]

FIG. 1 is a perspective view of a vehicle according to an embodiment of the present invention.
FIG. 2 is a cross-sectional view of a camera module according to a first embodiment of the present invention.
FIG. 3 is a plan view showing a region of a heating member according to a first embodiment of the present invention.
FIG. 4 is a view showing A-A' of FIG. 3.
FIG. 5 is a cross-sectional view of a heating member according to a second embodiment of the present invention.
FIG. 6 is a cross-sectional view of a heating member according to a third embodiment of the present invention.
FIG. 7 is a cross-sectional view of a heating member according to a fourth embodiment of the present invention.
FIG. 8 is a cross-sectional view of a heating member according to a fifth embodiment of the present invention.
FIG. 9 is a cross-sectional view of a heating member according to a sixth embodiment of the present invention.
FIG. 10 is a cross-sectional view of a heating member according to a seventh embodiment of the present invention.
FIG. 11 is a cross-sectional view of a heating member according to an eighth embodiment of the present invention.
FIG. 12 is a cross-sectional view of a heating member according to a ninth embodiment of the present invention.
FIG. 13 is a cross-sectional view of a heating member according to a tenth embodiment of the present invention.
FIG. 14 is a cross-sectional view of a heating member according to an eleventh embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

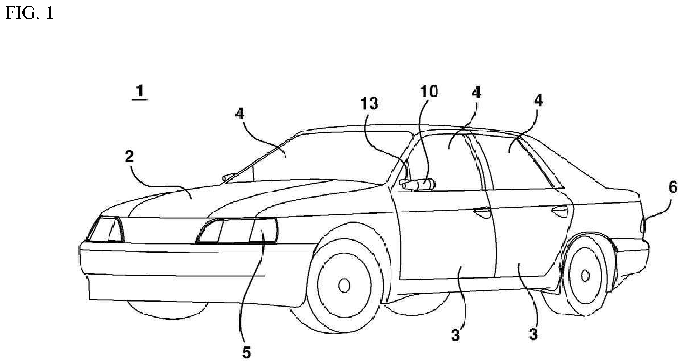

FIG. 1 is a perspective view of a vehicle according to an embodiment of the present invention.

Referring to FIG. 1, a vehicle **1** according to an embodiment of the present invention may include a body **2**, a door **3**, a glass **4**, a head lamp **5**, a tail lamp **6**, and a camera module **10**.

The body **2** may be an exterior member of the vehicle **1**. The body **2** may have various forms such as a frame type, a monocoque type, and the like. One or more doors **3** may be coupled to a side surface of the body **2**. In addition, the glass **4** may be coupled to front and rear portions of an upper portion of the body **2** (portions where pillars are formed) and the door **3**. The head lamp **5** may be mounted at a front of a lower portion of the body **2**. The tail lamp **6** may be mounted at a rear of the lower portion of the body **2**.

The camera module **10** may be installed on a side portion of the body **2** or a door disposed at a front among the one or more doors **3**. The camera module **10** may be installed in front of the glass **4** coupled to the door **3**. That is, in the vehicle **1** of the present embodiment, a side mirror may be replaced with the camera module **10**.

The camera module **10** may capture images of both rear sides of the vehicle. Images captured by the camera module **10** may be electrically connected to a display unit (not shown) through an electronic control unit (ECU) or the like. Accordingly, the images captured by the camera module **10** may be controlled by the electronic control unit (ECU) and reproduced on the display unit.

An interior space for a driver may be formed inside the body **2**. In addition, a display unit may be installed inside the body **2**. The display unit may output the images captured by the camera module **10**. The display unit may be installed on a dashboard (not shown) inside the body **2**.

The installation form of the camera module **10** in the vehicle **1** described above is exemplary, and the camera module **10** may be used for any one or more of a front camera, a side camera, a rear camera, and a black box of the vehicle **1**.

Hereinafter, a heating member and a camera module according to a first embodiment will be described with reference to the drawings.

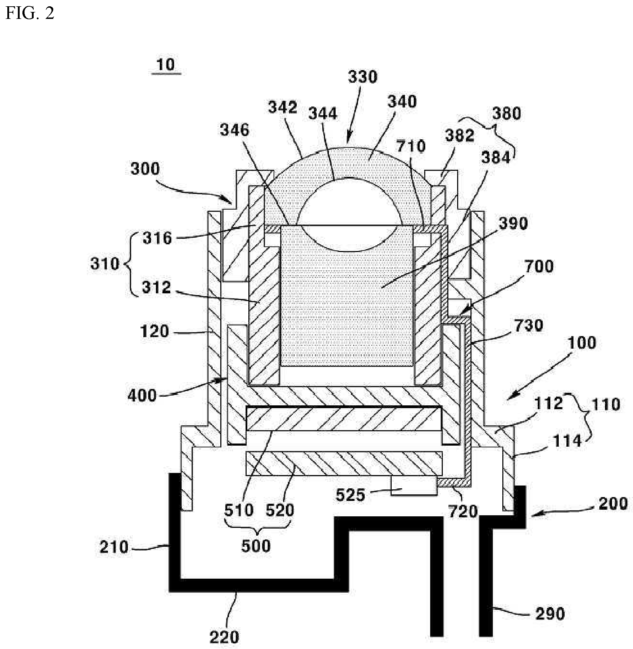

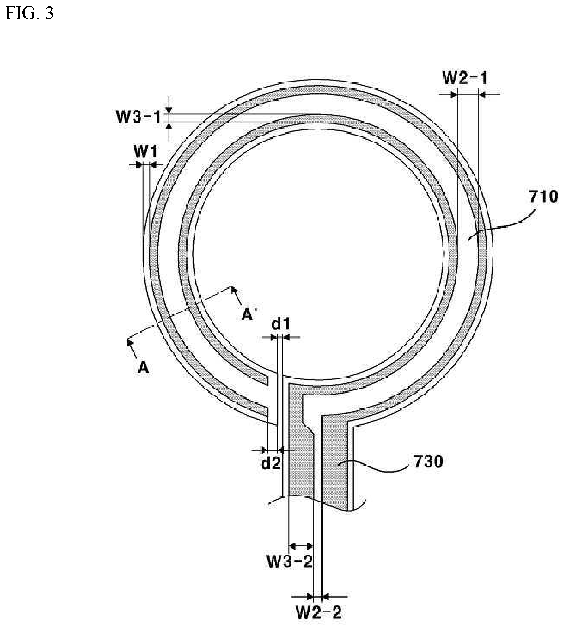

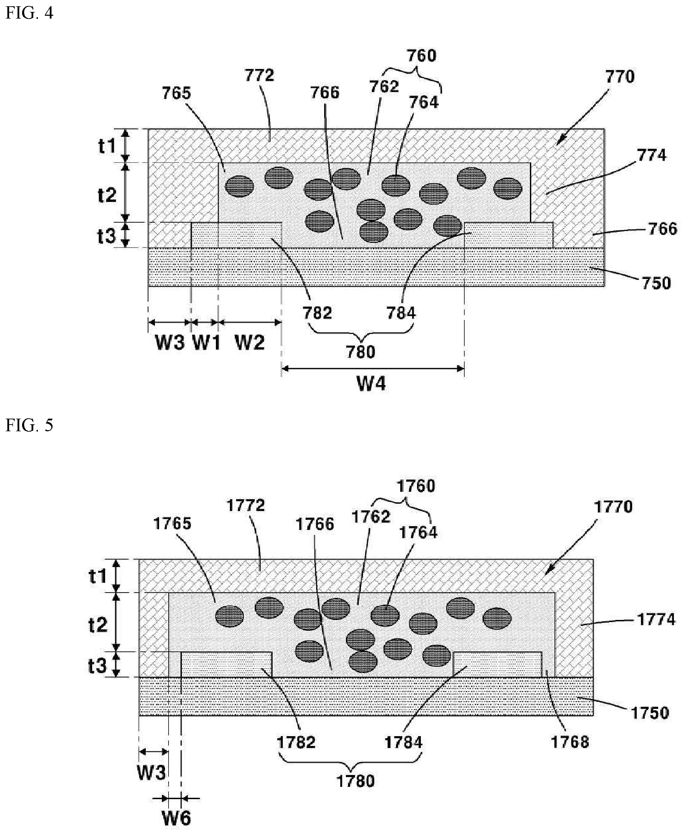

FIG. 2 is a cross-sectional view of a camera module according to a first embodiment of the present invention, FIG. 3 is a plan view showing a region of a heating member according to a first embodiment of the present invention, and FIG. 4 is a view showing A-A' of FIG. 3.

Referring to FIGS. 2 to 4, a camera module **10** according to the present embodiment may include a first body **100**, a second body **200**, a lens module **300**, a lens holder **400**, a substrate module **500**, and a heating member **700**.

The first body **100** may form an appearance of the camera module **10**. The first body **100** may be named any one of a front body, an upper housing, and a first housing. A space may be formed inside the first body **100** so that the lens module **300**, the lens holder **400**, and the substrate module **500** are disposed.

The first body **100** may include a body portion **110** and a protrusion **120**. The body portion **110** and the protrusion **120** may be integrally formed.

The body portion **110** may be formed of a metal material. The body portion **110** may be disposed on the second body **200**. The body portion **110** may be coupled to the second body **200**. A lower end of the body portion **110** may be fixed on the second body **200**. The body portion **110** may be coupled to the second body **200** by welding. Alternatively, the body portion **110** may be coupled to the second body **200** by an adhesive or fusion.

The body portion **110** may be formed in a square shape with an opened lower portion. At this time, corners of the body portion **110** may be formed to be rounded. The body portion **110** may include a top plate **112** and a first side plate **114** extending downward from an edge of the top plate **112**. The top plate **112** may be formed in a square shape. The top plate **112** may extend outward from a lower outer peripheral surface of the protrusion **120**. The first side plate **114** may extend downward from an outer edge of the top plate **112**. The first side plate **114** may be provided in plurality. The first side plate **114** may include four side plates. The first side plate **114** may be formed in a rectangular plate shape. As an example, the first side plate **114** may include a first-first side plate, a first-second side plate, a first-third side plate disposed on an opposite side of the first-first side plate, and a first-fourth side plate disposed on an opposite side of the first-second side plate. The first side plate **114** may include first-first to first-fourth corners respectively disposed between the first-first to first-fourth side plates. Each of the first-first to first-fourth corners may include a round shape in at least a portion thereof.

A space portion partitioned from other regions may be formed inside the body portion **110**. A lower portion of the space portion may be opened, and an upper portion of the space portion may be covered through lower surfaces of the protrusion **120** and the lens module **300**.

The first body **100** may include a protrusion **120**. The protrusion **120** may be formed of a metal material. The protrusion **120** may have a circular cross-sectional shape. The protrusion **120** may be disposed on the body portion **110**. The protrusion **120** may extend upward from an upper surface of the body portion **110**. The protrusion **120** may be integrally formed with the body portion **110**. As a modified embodiment, the protrusion **120** may be coupled to the body portion **110**. In this case, the protrusion **120** may be fixed to the body portion **110** by an adhesive. The protrusion **120** may accommodate the lens module **300** therein. A space to which the lens module **300** is coupled may be formed at a center of the protrusion **120**. The lens module **300** may be disposed in the space within the protrusion **120**.

The camera module **10** may include a second body **200**. The second body **200** may be named any one of a rear body, a lower housing, a second housing, and a rear cover. The second body **200** may be formed in a square shape with an opened upper portion. The second body **200** may be formed of a metal material. The second body **200** may be disposed under the first body **100**. The second body **200** may be coupled to the first body **100**. The second body **200** may form an internal space through coupling with the first body **100**. The second body **200** may include a space portion having an opened upper surface.

The second body **200** may include a lower plate **220**. The lower plate **220** may face the top plate **112** of the first body **100** in an optical axis direction. The lower plate **220** may be spaced apart from the top plate **112** of the first body **110** in the optical axis direction. The lower plate **220** may be parallel to the top plate **112** of the first body **100**. The lower plate **220** may be formed in a square shape. At this time, corners of the lower plate **220** may include a round shape in at least a portion thereof.

The second body **200** may include a second side plate **210**. The second side plate **210** may extend from the lower plate **220**. The second side plate **210** may extend upward from an outer edge of the lower plate **220**. A shield member (not shown) may be disposed on the second side plate **210**. The shield member may be in surface contact with an inner surface of the second side plate **210**. An upper end of the second side plate **210** may be coupled to the first body **100**. The inner surface of the second side plate **210** may be disposed to surround an outer surface of the first side plate **114**. The inner surface of the second side plate **210** and the outer surface of the first side plate **114** may be coupled to each other by at least one method among welding, an adhesive, and fusion.

The second body **200** may include a connector drawing-out portion **290**. The connector drawing-out portion **290** may have a shape protruding downward from a lower surface of the lower plate **220**. A connector (not shown) to be described later may be disposed inside the connector drawing-out portion **290**. An upper end of the connector may be coupled to a lower surface of the substrate module **500** and extend downward. The connector drawing-out portion **290** may be formed of a metal material. The connector drawing-out portion **290** may have a hollow pipe shape therein so that at least a portion of the connector is disposed.

The camera module **10** may include a lens module **300**. The lens module **300** may be coupled to the first body **100**. The lens module **300** may be coupled to a hole of the protrusion **120**. At least a portion of the lens module **300** may be disposed inside the protrusion **120**, and the remaining portion may be disposed to protrude upward from the first body **100**.

The lens module **300** may include a barrel **310** and one or more lenses **330** accommodated in the barrel **310**. The lens **330** may be disposed to face an image sensor in a substrate module **500** to be described later in an optical axis direction. The lens **330** may be optically aligned with the image sensor. The lens **330** may be provided in plurality and disposed to be spaced apart from each other along the optical axis direction within the barrel **310**. The lens **330** may include an outermost lens **340** and a rear lens **390** disposed at a rear of the outermost lens **340**. In FIG. 2, the rear lens **390** is illustrated as a single lens as an example, but is not limited thereto, and the rear lens **390** may also be provided in plurality and disposed along the optical axis direction within the barrel **310**. At least a portion of the outermost lens **340** may protrude upward from the camera module **10**.

The barrel **310** may include a space having opened upper and lower surfaces therein. The lens **330** may be disposed in the space of the barrel **310**. The barrel **310** may have a circular cross-sectional shape. The barrel **310** may be of a metal material.

The barrel **310** may include a first body **312** and a second body 316. The first body **312** and the second body **316** may be integrally formed. An outer surface of the first body **312** and an outer surface of the second body **316** may form a coplanar surface in the optical axis direction. The second body **316** may have a shape in which a portion of an upper surface of the first body **312** protrudes upward. Based on a direction perpendicular to the optical axis direction, a thickness of the first body **312** may be thicker than a thickness of the second body **316**. Accordingly, a cross-sectional area of an arrangement region of the lens **330** formed in the first body **312** may be larger than a cross-sectional area of an arrangement region of the lens **330** formed in the second body **316**. A step having a shape protruding inward more than other regions may be disposed in a space within the barrel **310** forming an inner surface of the first body **312**. The rear lens **390** may be disposed in a space within the first body **312**, and the outermost lens **340** may be disposed in a space within the second body **316**. At least a portion of the rear lens **390** may protrude upward from the barrel **310**, and another portion may be disposed in the space within the second body **316.**

A through-hole or a through-groove may be formed in the second body **316**, which is formed to penetrate from an inner surface to an outer surface of the second body **316** based on the direction perpendicular to the optical axis direction, so that a connection portion **730** of a heating member **700** to be described later passes therethrough.

The lens module **300** may include a retainer **380**. The retainer **380** may be coupled to an outer surface of the barrel **310**. The retainer **380** may be screw-coupled with the barrel **310**. Alternatively, the retainer **380** and the barrel **310** may be coupled to each other through epoxy. The retainer **380** may be coupled to an upper end of the barrel **310**. At least a portion of the retainer **380** may be disposed inside the first body **100**. An incident surface of an outermost lens among the lenses **330** may protrude upward more than an upper surface of the retainer **380**.

The combined structure of the barrel **310** and the retainer **380** described above is exemplary, and the camera module **10** may be implemented in an integrated structure in which the barrel **310** and the retainer **380** are one body.

The retainer **380** may have a ring-shaped cross section. At least a portion of the retainer **380** may be disposed to cover an edge of the outermost lens **340**. The retainer **380** may be disposed to surround the edge of the outermost lens **340**. The retainer **380** may be disposed to cover an edge of the incident surface of the outermost lens **340**. The retainer **380** may be in contact with a portion of the incident surface of the outermost lens **340**. A coupling groove **360** for coupling with the retainer **380** may be formed on the incident surface of the outermost lens **340**. This will be described later.

The retainer **380** may include a first region **382** in which a lower surface supports the incident surface of the outermost lens **340**, and a second region **384** extending downward from an edge of the first region **382**. The second region **384** may be disposed between the barrel **310** and the first body **100**. The first region **382** and the second region **384** may be disposed perpendicular to each other.

The camera module **10** may include a lens holder **400**. The lens holder **400** may be disposed between the first body **100** and the barrel **310**. The lens holder **400** may be disposed to surround an outer surface of the barrel **310**. The lens holder **400** may be formed in a cylindrical shape having a hollow penetrating from an upper surface to a lower surface. A screw thread or a screw groove may be formed on an inner surface of the lens holder **400**. A screw groove or a screw thread may be formed on the outer surface of the barrel **310** facing the inner surface of the lens holder **400**. The barrel **310** may be screw-coupled within the lens holder **400**.

A substrate coupling portion to which a first substrate **510** of a substrate module **500** to be described later is coupled may be formed on the lower surface of the lens holder **400**. The substrate coupling portion may have a groove shape concave upward more than other regions.

The lens holder **400** may be omitted. In this case, the substrate module **500** may be coupled to a space within the first body **100**.

The camera module **10** may include a substrate module **500**. The substrate module **500** may be disposed in a space within the camera module **10**. The substrate module **500** may be disposed between the first body **100** and the second body **200**.

The substrate module **500** may include a first substrate **510**, a second substrate **520**, and a connection substrate (not shown).

The first substrate **510** may be a printed circuit board (PCB). An image sensor may be disposed on an upper surface of the first substrate **510**. The image sensor may be disposed on the first substrate **510** to face the lens **330** in the lens module **300** in an optical axis direction. The first substrate **510** may be disposed within the substrate coupling portion of the lens holder **400**.

The second substrate **520** may be a printed circuit board (PCB). The second substrate **520** may be disposed to be spaced apart from the first substrate **510** in the optical axis direction. The second substrate **520** may be disposed under the first substrate **510**. A connector (not shown) may be coupled to a lower surface of the second substrate **520**. An upper end of the connector may be soldered to the lower surface of the second substrate **520**.

A terminal **525** may be disposed on the lower surface of the second substrate **520**. The terminal **525** may be electrically and physically connected to a lower end of a heating member **700** to be described later.

The second substrate **520** may be electrically connected to the first substrate **510**. The second substrate **520** and the first substrate **510** may be electrically connected through the connection substrate. The connection substrate may be a flexible printed circuit board (FPCB). Upper and lower ends of the connection substrate may be respectively coupled to the first substrate **510** and the second substrate **520** to electrically connect the first substrate **510** and the second substrate **520**.

The substrate module **500** may further include a shield can (not shown) disposed between the first substrate **510** and the second substrate **520**. The first substrate **510** and the second substrate **520** may be spaced apart from each other in the optical axis direction through the shield can.

Hereinafter, a heating structure of a lens according to a first embodiment of the present invention will be described.

The camera module **10** may include a heating member **700**. The heating member **700** may provide heat to a surface of the lens **330**. The heating member **700** may provide heat to a surface of an outermost lens **340** among a plurality of lenses **330**. Accordingly, frost formed on the surface of the outermost lens **340** may be removed.

The heating member **700** may be a PTC heater (positive temperature coefficient heater). One end of the heating member **700** may be connected to the surface of the outermost lens **340**, and the other end of the heating member **700** may be connected to the substrate module **500**.

The outermost lens **340** disposed on the barrel **310** may include an incident surface **342** into which light is incident, an exit surface **344** facing the incident surface **342** and through which the incident light is emitted toward the image sensor, and a connection surface **346** connecting the incident surface **342** and the exit surface **344**. The connection surface **346** may form a lower surface of the lens **330**. The connection surface **346** may form a side surface of the lens **330**. One end of the heating member **700** may be coupled to the connection surface **346**. The connection surface **346** may be disposed outside an area forming a view angle of the outermost lens **340**.

The connection surface **346** may include a plurality of surfaces. The connection surface **346** may include a first-first connection surface forming a lower surface of the lens **330**, and a first-second connection surface forming a side surface of the lens **330**. The first-first connection surface and the first-second connection surface may be disposed perpendicular to each other. One end of the heating member **700** may be coupled to the first-first connection surface. However, it is not limited thereto, and one end of the heating member **700** may also be coupled to the first-second connection surface.

Among the connection surface **346**, the first-first connection surface may include a plurality of surfaces disposed to be stepped with each other in the optical axis direction. The plurality of surfaces may include a first-first surface and a first-second surface disposed inside the first-first surface. The plurality of surfaces may include a first-first side surface connecting the first-first surface and the first-second surface. The plurality of surfaces may include a first-second side surface disposed outside the first-first surface. The first-first surface may be disposed higher than the first-second surface. One end of the heating member **700** may be coupled to the first-first surface. One end of the heating member **700** may be coupled to the first-second side surface.

The heating member **700** may be in a film shape. The heating member **700** may be a substrate on which a circuit pattern is formed. The heating member **700** may be a flexible printed circuit board (FPCB).

The heating member **700** may include an upper end portion **710**, a lower end portion **720**, and a connection portion **730**. The upper end portion **710** is disposed at an upper end of the heating member **700** and may be coupled to the lens **330**. The upper end portion **710** has a ring-shaped cross section and may be coupled to the connection surface **346**. The upper end portion **710** may generate heat by providing power. The upper end portion **710** may have a circular shape corresponding to a shape of the lens **330** or the barrel **310**. A coupling structure of the upper end portion **710** and the lens **330** will be described later.

The lower end portion **720** is disposed at a lower end of the heating member **700** and may be coupled to the substrate module **500**. The lower end portion **720** may be coupled to a lower surface of the second substrate **520** of the substrate module **500**. The lower end portion **720** may be coupled to the terminal **525** disposed on the lower surface of the second substrate **520**. Accordingly, power may be provided from the substrate module **500** to the heating member **700**, or a driving signal may be transmitted and received.

The connection portion **730** may connect the upper end portion **710** and the lower end portion **720**. The connection portion **730** may include a region bent at least once or more. At least a portion of the connection portion **730** may be disposed between an outer surface of the barrel **310** and an inner surface of the first body **100**. A hole (not shown) may be formed in the barrel **310** so that the connection portion **730** passes therethrough.

As shown in FIG. 3, a width **W3-2** of an electrode of the connection portion **730** may be larger than a width **W3-1** of an electrode of the upper end portion **710**. Accordingly, loss of power provided from the substrate module **500** may be minimized.

The upper end portion **710** may include a plurality of electrodes **780** spaced apart from each other in a radial direction. Similarly, the connection portion **730** may include a plurality of electrodes respectively connected to the plurality of electrodes **780**. A distance **W2-1** between the plurality of electrodes in the upper end portion **710** may be larger than a distance **W2-2** between the plurality of electrodes in the connection portion **730**. Accordingly, in the connection portion **730**, power loss may be minimized with relatively large-width electrodes, and in the upper end portion **710**, thermal efficiency of a heating region may be improved by maximizing the distance **W2-1** between the plurality of electrodes.

A region in which a width of an electrode decreases may be provided between the connection portion **730** and the upper end portion **710**. When the width is rapidly decreased from the width **W3-2** of the electrode in the connection portion **730** to the width **W3-1** of the electrode in the upper end portion **710**, a crack may occur due to a rapid change in an amount of current. Therefore, in the present embodiment, as shown in FIG. 3, a crack may be prevented by forming a region in which a width gradually decreases between the connection portion **730** and the upper end portion **710**.

As shown in FIG. 3, the upper end portion **710** is connected to the connection portion **730**, and the other end of the upper end portion **710** may be spaced apart from the connection portion **730** by a first separation distance **d1**. Accordingly, assembly reliability may be secured when the heating member **700** is attached to the lens **330**. The other end of the upper end portion **710** and an end of the electrode in the upper end portion **710** may be spaced apart by a second separation distance **d2**. Accordingly, the electrode in the upper end portion **710** may be prevented from being exposed to the outside, thereby improving heat transfer reliability of the heating member **700**.

Here, to secure assembly reliability, the first separation distance d1 may be smaller than the second separation distance **d2**. In addition, a radial width **W1** between an electrode disposed radially outward among the plurality of electrodes **780** in the upper end portion **710** and an outer circumferential surface of the upper end portion **710** may be smaller than the second separation distance **d2**. In addition, a radial distance **W2-1** between the plurality of electrodes **780** in the upper end portion **710** may be larger than the first separation distance **d1**.

As shown in FIG. 4, the heating member **700** may include a substrate **750**, an electrode **780**, a heating layer **760**, and a protective layer **770**.

The substrate **750** may be a flexible printed circuit board (FPCB). The substrate **750** may be named a base material. The substrate **750** may be in a film shape. A material of the substrate **750** may be polyimide or PET.

The electrode **780** may be disposed on a surface of the substrate **750**. The electrode **780** may be disposed on an upper surface of the substrate **750**. The electrode **780** may include a plurality of electrodes having different polarities. The electrode **780** may include a first electrode **782** of a first-first polarity and a second electrode **784** of a first-second polarity opposite to the first-first polarity. The first electrode **782** and the second electrode **784** may be mounted on the substrate **750**. The first electrode **782** and the second electrode **784** may be disposed to be spaced apart from each other in a horizontal direction perpendicular to an up-down direction. A side surface of the first electrode **782** may be disposed further inside than one side surface of the substrate **750**. A side surface of the second electrode **784** may be disposed further inside than the other side surface of the substrate **750**. A radial distance **w3** from any one of the plurality of electrodes **780** to an inner side surface or an outer side surface of the substrate **750** may be smaller than a distance w4 between the plurality of electrodes **780**. Accordingly, heat transfer toward the lens **330** may be more easily performed than toward a side surface of the heating member **700**.

The heating layer **760** may be disposed on the substrate **750**. The heating layer **760** may include a polymer **762** and conductive particles **764** disposed within the polymer **762**. The polymer **762** may be disposed to surround the conductive particles **764**. The conductive particles **764** may be embedded within the polymer **762**.

The heating layer **760** may generate heat by a change in resistance of the conductive particles **764** by power provided from the substrate module **500**.

A diameter of the conductive particles **764** may be smaller than a thickness t3 of the electrode **780** in the optical axis direction. Accordingly, heat transfer to an area between the plurality of electrodes **780** may be more easily performed.

A thickness (**t2**+**t3**) of the heating layer **760** may be larger than a thickness of the substrate **750**. Accordingly, thermal efficiency generated from the heating member **700** may be maximized.

The heating layer **760** may include an upper heating layer portion **765** disposed on the electrode **780**, and a lower heating layer portion **766** having a shape protruding downward from a lower surface of the upper heating layer portion **765** more than other regions. The lower heating layer portion **766** may be disposed between the plurality of electrodes **780**. The lower heating layer portion **766** may be disposed to overlap the plurality of electrodes **780** in a horizontal direction. A lower surface of the lower heating layer portion **766** may be in contact with an upper surface of the substrate **750**. Since a contact area with the electrode **780** is increased by the lower heating layer portion **766**, electrical conductivity of the heating layer **760** may be improved. Conductive particles **764** disposed in the lower heating layer portion **766** may be disposed to overlap the electrode **780** in the horizontal direction. To prevent overheating of the electrode **780**, a density of conductive particles disposed in the lower heating layer portion **766** may be lower than a density of conductive particles disposed in the upper heating layer portion **765**.

A cross-sectional area of the upper heating layer portion **765** may be larger than a cross-sectional area of the lower heating layer portion **766**. A thickness **t2** of the upper heating layer portion **765** may be larger than a thickness **t3** of the lower heating layer portion **766** or a thickness t3 of the electrode **780**. Accordingly, by forming the thickness of the upper heating layer portion **765** having a relatively large cross-sectional area to be larger, thermal efficiency of the heating member **700** may be increased.

A side surface of the electrode **780** may protrude further outward than a side surface of the heating layer **760**. In detail, as shown in FIG. 4, a side surface of the first electrode **782** may protrude further inward than one side surface of the heating layer **760**. A side surface of the second electrode **784** may protrude further outward than the other side surface of the heating layer **760**. Radial lengths to the side surface of the first electrode **782** and the side surface of the second electrode **784** protruding from both side surfaces of the heating layer **760** may be longer than a radial length of the heating layer **760**. The electrode **780** may have a region that does not overlap the heating layer **760** in an up-down direction. The electrode **780** may include a first-first region overlapping the heating layer **760** in the up-down direction, and a first-second region protruding from the side surface of the heating layer **760** without overlapping the heating layer **760** in the up-down direction. A radial length **w2** of the first-first region may be longer than a radial length **w1** of the first-second region. Accordingly, electrical conductivity between the electrode **780** and the heating layer **760** may be improved.

A radial distance **w3** from any one of the plurality of electrodes **780** to an inner side surface or an outer side surface of the substrate **760** may be longer than the radial length **w1** of the first-second region. Accordingly, by increasing a contact area between a lower surface portion **776** of a protective layer **770** to be described later and the substrate **750**, a combined state of the substrate **750**, the electrode **780**, the heating layer **760**, and the protective layer **770** may be firmly maintained.

As a modified embodiment, the radial distance **w3** from any one of the plurality of electrodes **780** to the inner side surface or the outer side surface of the substrate **760** may be shorter than the radial length **w1** of the first-second region. In this case, as an amount of conductive particles **764** in the polymer **762** increases by increasing a horizontal length of the heating layer **760**, heating efficiency may be improved.

The protective layer **770** may be disposed on the substrate **750**, the electrode **780**, and the heating layer **760**. The protective layer **770** covers upper surfaces of the substrate **750**, the electrode **780**, and the heating layer **760**, and may protect the substrate **750**, the electrode **780**, and the heating layer **760** from various external factors.

The protective layer **770** may include any one of an adhesive material having adhesiveness, an adhesive, and an adhesive tape. For example, the protective layer **770** may be of a thermosetting material. Accordingly, the heating member **700** may be coupled to the lens **330** by curing.

The protective layer **770** may include an upper surface portion **772**, a lower surface portion **776**, and a central portion **774**. The upper surface portion **772** may be disposed on the heating layer **760**. A cross-sectional area of the upper surface portion **772** may correspond to a cross-sectional area of the substrate **750**. A thickness **t1** of the upper surface portion **772** may be 5 um or more and **100** um or less. The thickness **t1** of the upper surface portion **772** may be smaller than the thickness (**t2**+**t3**) of the heating layer **760**. The thickness t1 of the upper surface portion **772** may be smaller than the thickness **t2** of the upper heating layer portion **765**. The thickness **t1** of the upper surface portion **772** may be equal to or less than a sum of a thickness **t2** of the central portion **774** and a thickness **t3** of the lower surface portion **776**. Accordingly, loss of heat provided to the lens **330** disposed on the protective layer **770** may be minimized.

There is an advantage in that a coupling force with the lens **330** may be more stably achieved by the upper surface portion **772** in which flatness adjustment is easy.

The central portion **774** may have a shape in which a portion of a lower surface of the upper surface portion **772** protrudes downward. The central portion **774** may be disposed to overlap the upper heating layer portion **765** in a horizontal direction. A thickness **t2** of the central portion **774** may correspond to a thickness of the upper heating layer portion **765**. The lower surface portion **776** may have a shape in which a portion of a lower surface of the central portion **774** protrudes downward. The lower surface portion **776** may be disposed to overlap the electrode **780** and the lower heating layer portion **766** in the horizontal direction. A thickness **t3** of the lower surface portion **776** may correspond to a thickness t3 of the electrode **780** and a thickness **t3** of the lower heating layer portion **766**.

By the first-second region of the electrode **780** protruding from the side surface of the heating layer **760**, the protective layer **770** may be disposed to cover upper surfaces and side surfaces of the heating layer **760**, upper surfaces and side surfaces of the electrode **780**, and an upper surface of the substrate **750**, respectively. Accordingly, there is an advantage in that the heating layer **760**, the electrode **780**, and the substrate **750** may be coupled to each other through the single protective layer **770** having adhesiveness.

Thermal conductivity of the protective layer **770** may be higher than thermal conductivity of the substrate **750**. Accordingly, heat may be concentrated toward the lens **330** through the protective layer **770**.

FIG. 5 is a cross-sectional view of a heating member according to a second embodiment of the present invention.

In the present embodiment, other parts are the same as those of the first embodiment, but there is a difference in an arrangement structure of a heating layer and an electrode. Therefore, hereinafter, only characteristic parts of the present embodiment will be described, and for the remaining parts, the description according to the first embodiment will be cited.

Referring to FIG. 5, the heating member according to the present embodiment may include a substrate **1750**, an electrode **1780**, a heating layer **1760**, and a protective layer **1770**. The heating layer **1760** may be disposed on the substrate **1750**. The electrode **1780** may be disposed on a surface of a polymer **1762** in the heating layer **1760**. The electrode **1780** may be embedded within the heating layer **1760**. A side surface of the electrode **1780** may be disposed further inside than a side surface of the heating layer **1760**. The electrode **1780** may be disposed within the heating layer **1760**.

More specifically, the heating layer **1760** may include an upper heating layer portion **1765**, and lower heating layer portions **1766** and **1768** having a shape protruding downward from a lower surface of the upper heating layer portion **1765**. The lower heating layer portions **1766** and **1768** may include a first-first lower heating layer portion **1766** disposed between a plurality of electrodes **1780**, and a first-second lower heating layer portion **1768** disposed outside the plurality of electrodes **1780**. The first-second lower heating layer portion **1768** may include a second-first lower heating layer portion disposed between a first electrode **1782** and one side surface of the protective layer **1770**, and a second-second lower heating layer portion disposed between a second electrode **1784** and the other side surface of the protective layer **1770**.

The protective layer **1770** is disposed on the substrate **1750** and may be disposed to surround an outer surface of the heating layer **1760**. The protective layer **1770** may include an upper surface portion **1772** and a lower surface portion **1774** protruding downward from a lower surface of the upper surface portion **1772**. The lower surface portion **1774** may be disposed to surround one side surface and the other side surface of the heating layer **1760**.

A radial length w6 of the second-first lower heating layer portion or the second-second lower heating layer portion may be smaller than a radial length w5 of the lower surface portion **1774** of the protective layer **1770** overlapping the first-second lower heating layer portion **1768** in a horizontal direction.

In the present embodiment, compared to the first embodiment, there is an advantage in that electrical conductivity to the heating layer **1760** may be improved by increasing a contact area between the heating layer **1760** and the electrode **1780**.

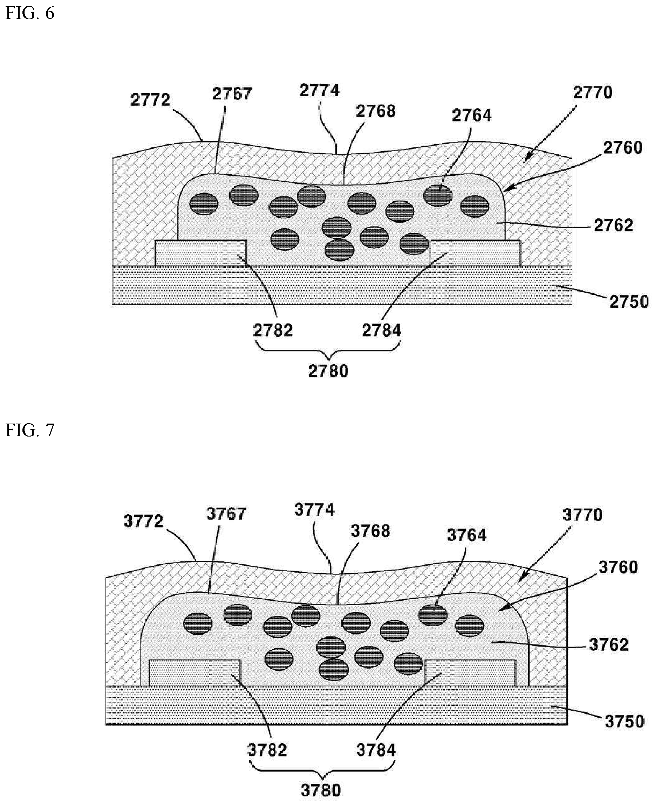

FIG. 6 is a cross-sectional view of a heating member according to a third embodiment of the present invention.

In the present embodiment, other parts are the same as those of the first embodiment, but there is a difference in shapes of a heating layer and a protective layer. Therefore, hereinafter, only characteristic parts of the present embodiment will be described, and for the remaining parts, the description according to the first embodiment will be cited.

Referring to FIG. 6, the heating member according to the present embodiment may include a substrate **2750**, an electrode **2780**, a heating layer **2760**, and a protective layer **2770**.

A plurality of first-first convex portions **2767** and a first-first concave portion **2768** disposed between the plurality of first-first convex portions **2767** may be disposed on an upper surface of the heating layer **2760** facing the lens. The first-first convex portion **2767** may have a shape protruding upward more than other regions. At least a portion of the first-first convex portion **2767** may be disposed to overlap the electrodes **2782** and **2784** in an up-down direction. The first-first concave portion **2768** may have a shape concave downward more than other regions. The first-first concave portion **2768** may be disposed to overlap a region between the plurality of electrodes **2782** and **2784** in the up-down direction.

A plurality of first-second convex portions **2772** and a first-second concave portion **2774** disposed between the plurality of first-second convex portions **2772** may be disposed on an upper surface of the protective layer **2770** facing the lens. The first-second convex portion **2772** may have a shape protruding upward more than other regions. At least a portion of the first-second convex portion **2772** may be disposed to overlap the electrodes **2782** and **2784** or the first-first convex portion **2767** in the up-down direction. The first-second concave portion **2774** may have a shape concave downward more than other regions. The first-second concave portion **2774** may be disposed to overlap the region between the plurality of electrodes **2782** and **2784** in the up-down direction.

According to the structure described above, there is an advantage in that a surface of the lens may be more uniformly heated by forming surfaces of the heating layer **2760** and the protective layer **2770** facing an edge region of the lens to protrude more than other regions.

FIG. 7 is a cross-sectional view of a heating member according to a fourth embodiment of the present invention.

In the present embodiment, other parts are the same as those of the third embodiment, but there is a difference in an arrangement structure of a heating layer and an electrode. Therefore, hereinafter, only characteristic parts of the present embodiment will be described, and for the remaining parts, descriptions according to the first embodiment and the third embodiment will be cited.

Referring to FIG. 7, the heating member according to the present embodiment may include a substrate **3750**, electrodes **3782** and **3784**, a heating layer **3760**, and a protective layer **3770**.

The heating layer **3760** in the heating member according to the present embodiment may be disposed on the substrate **3750** to surround the electrodes **3782** and **3784**. The electrodes **3782** and **3784** may be embedded within the heating layer **3760**. A side surface of the electrode **3780** may be disposed further inside than a side surface of the heating layer **3760**. The electrodes **3782** and **3784** may be disposed within the heating layer **3760**. A portion of the side surface of the heating layer **3760** may be disposed between a side surface of the protective layer **3770** and side surfaces of the electrodes **3782** and **3784**.

Accordingly, there is an advantage in that electrical conductivity to the heating layer **3760** may be improved by increasing a contact area between the heating layer **3760** and the electrodes **3782** and **3784**.

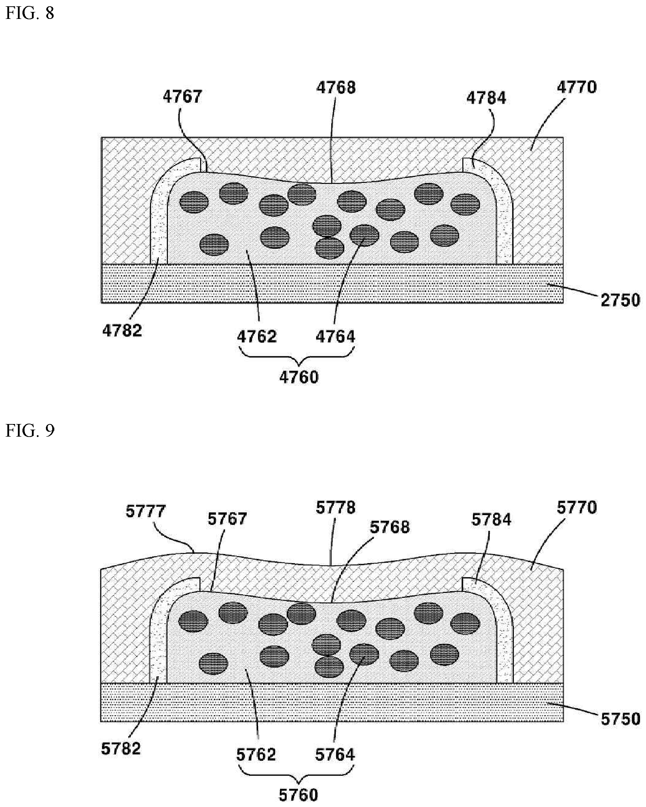

FIG. 8 is a cross-sectional view of a heating member according to a fifth embodiment of the present invention.

In the present embodiment, other parts are the same as those of the third embodiment, but there is a difference in an arrangement structure of a heating layer and an electrode. Therefore, hereinafter, only characteristic parts of the present embodiment will be described, and for the remaining parts, descriptions according to the first embodiment and the third embodiment will be cited.

Referring to FIG. 8, the heating member according to the present embodiment may include a substrate **4750**, electrodes **4782** and **4784**, a heating layer **4760**, and a protective layer **4770**.

The heating layer **4760** may be disposed on the substrate **4750**. The heating layer **4760** may include a polymer **4762** and conductive particles **4764** disposed within the polymer **4762**. A plurality of first-first convex portions **4767** having a shape protruding upward more than other regions and a first-first concave portion **4768** disposed between the plurality of first-first convex portions **4767** may be disposed on an upper surface of the heating layer **4760**.

The electrodes **4782** and **4784** may be disposed on the upper surface of the heating layer **4760**. The electrodes **4782** and **4784** may be disposed to overlap the first-first convex portions **4767** in an up-down direction. At least a portion of the electrodes **4782** and **4784** may be disposed on the first-first convex portions **4767**.

The protective layer **4770** may be disposed on the heating layer **4760** and the electrodes **4782** and **4784**. The protective layer **4770** may include an upper surface portion **4772** and a lower surface portion **4774** protruding downward from a lower surface of the upper surface portion **4772**. The lower surface portion **4774** may be disposed to surround the electrodes **4782** and **4784**.

Accordingly, in the present embodiment, a distance between the electrodes **4782** and **4784** and the lens may be minimized by disposing the electrodes **4782** and **4784** on the first-first convex portions **4767** of the heating layer **4760**, thereby maximizing thermal efficiency.

According to the structure described above, there is an advantage in that the substrate **4750**, the electrodes **4782** and **4784**, and the heating layer **4760** may be firmly coupled to each other through the single protective layer **4770**. In addition, there is an advantage in that the electrodes **4782** and **4784** may be more elastically coupled on an outer surface of the heating layer **4760** through the protective layer **4770**.

FIG. 9 is a cross-sectional view of a heating member according to a sixth embodiment of the present invention.

In the present embodiment, other parts are the same as those of the fifth embodiment, but there is a difference in a shape of a protective layer. Therefore, hereinafter, only characteristic parts of the present embodiment will be described, and for the remaining parts, descriptions according to the first embodiment and the fifth embodiment will be cited.

Referring to FIG. 9, the heating member according to the present embodiment may include a substrate **5750**, electrodes **5782** and **5784**, a heating layer **5760**, and a protective layer **5770**.

An upper surface of the protective layer **5770** may include a plurality of first-first convex portions **5777** and a first-first concave portion **5778** disposed between the plurality of first-first convex portions **5777**. The plurality of first-first convex portions **5777** may have a shape protruding upward more than other regions. The first-first concave portion **5778** may have a shape concave downward more than other regions.

At least a portion of the first-first convex portion **5777** of the protective layer **5770** may be disposed to overlap a first-first convex portion **5767** of the heating layer **5760** or the electrode **5780** in an up-down direction. The first-first concave portion **5778** of the protective layer **5770** may be disposed to overlap a first-first concave portion **5768** of the heating layer **5760** or a region between the plurality of electrodes **5782** and **5784** in the up-down direction.

According to the structure described above, there is an advantage in that a surface of the lens may be more uniformly heated by forming a surface of the protective layer **5770** facing an edge region of the lens to protrude more than other regions.

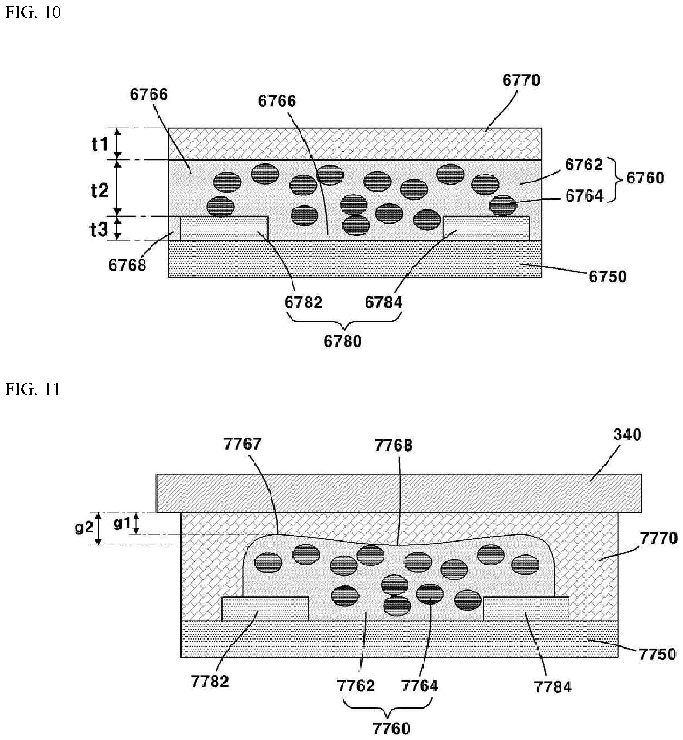

FIG. 10 is a cross-sectional view of a heating member according to a seventh embodiment of the present invention.

In the present embodiment, other parts are the same as those of the first embodiment, but there is a difference in an arrangement structure of a heating layer and an electrode. Therefore, hereinafter, only characteristic parts of the present embodiment will be described, and for the remaining parts, the description according to the first embodiment will be cited.

Referring to FIG. 10, the heating member according to the present embodiment may include a substrate **6750**, an electrode **6780**, a heating layer **6760**, and a protective layer **6770**. In the heating member according to the present embodiment, the substrate **6750**, the heating layer **6760**, and the protective layer **6770** have the same cross-sectional area as each other and may be stacked in an up-down direction.

In detail, the heating layer **6760** may be disposed on the substrate **6750**. The heating layer **6760** may include an upper heating layer portion **6766** disposed on the electrode **6780**, and lower heating layer portions **6767** and **6768** protruding downward from a lower surface of the upper heating layer portion **6766**. The lower heating layer portions **6767** and **6768** may include a first-first lower heating layer portion **6767** disposed between a plurality of electrodes **6780**, and a first-second lower heating layer portion **6768** disposed outside the plurality of electrodes **6780**. A radial length of the first-second lower heating layer portion **6768** may be shorter than a radial length of the electrode **6780**.

The plurality of electrodes **6780** may include a first electrode **6782** and a second electrode **6784** having a polarity different from that of the first electrode **6782** and being spaced apart from each other in a horizontal direction.

A side surface of the heating layer **6760** may be disposed to form the same plane as a side surface of the substrate **6750**.

The protective layer **6770** may be disposed on the heating layer **6760**. The protective layer **6770** is formed in a film shape and may be disposed to overlap the heating layer **6760** in an up-down direction. A side surface of the protective layer **6770** may be disposed to form the same plane as the side surface of the heating layer **6760** and the side surface of the substrate **6750**. A cross-sectional area of the protective layer **6770** may be formed to correspond to a cross-sectional area of the heating layer **6760** or a cross-sectional area of the substrate **6750**.

According to the structure described above, compared to the above-described embodiments, as the cross-sectional area of the heating layer **6760** increases, an amount of conductive particles **6764** in the heating layer **6760** also increases, thereby having an advantage in that a heating value may be increased.

FIG. 11 is a cross-sectional view of a heating member according to an eighth embodiment of the present invention.

In the present embodiment, other parts are the same as those of the third embodiment, but there is a difference in shapes of a protective layer and a heating layer according to coupling of a lens. Therefore, hereinafter, only characteristic parts of the present embodiment will be described, and for the remaining parts, the description according to the third embodiment will be cited.

Referring to FIG. 11, the heating member according to the present embodiment may include a substrate **7750**, electrodes **7782** and **7784**, a heating layer **7760**, and a protective layer **7770**. The heating member may be coupled to a surface of the lens **340**. The heating member may be coupled to a rear surface of the lens **340** through adhesive strength of the protective layer **7770**. The heating member may be coupled to an exit surface of the lens **340**. The protective layer **7770** may be in surface contact with the surface of the lens **340**.

A cross-sectional area of the lens **340** may be larger than a cross-sectional area of the heating member.

A plurality of first-first convex portions **7767** and a first-first concave portion **7768** disposed between the plurality of first-first convex portions **7767** may be disposed on an upper surface of the heating layer **7760** facing the surface of the lens **340**. The first-first convex portion **776**7 may have a shape protruding upward more than other regions. At least a portion of the first-first convex portion **7767** may be disposed to overlap the electrodes **7782** and **7784** in an up-down direction. The first-first concave portion **7768** may have a shape concave downward more than other regions. The first-first concave portion **7768** may be disposed to overlap a region between the plurality of electrodes **7782** and **7784** in the up-down direction.

By the first-first convex portion **7767** and the first-first concave portion **776**8, the heating layer **7760** may include regions having different distances from the surface of the lens **340** in an optical axis direction. In detail, the heating layer **7760** may have a first separation distance **g2** from the surface of the lens **340** in the optical axis direction in a formation region of the first-first convex portion **7767**. The heating layer **7760** may have a second separation distance **g1** from the surface of the lens **340** in the optical axis direction in a formation region of the first-first concave portion **7768**. The first separation distance **g2** and the second separation distance **g1** may be different from each other. The first separation distance **g2** may be shorter than the second separation distance **g1**.

According to the structure described above, as an optical axis direction distance between an edge region of the lens **340** and the heating layer **7760** is formed relatively short, there is an advantage in that a surface of the lens **340** may be more uniformly heated by more intensively providing heat to the edge region of the lens **340**. In addition, by forming a thickness of the heating layer **7760** overlapping the electrodes **7782** and **7784** to be relatively thin, there is an advantage in that heat may be concentrated toward the lens **340**.

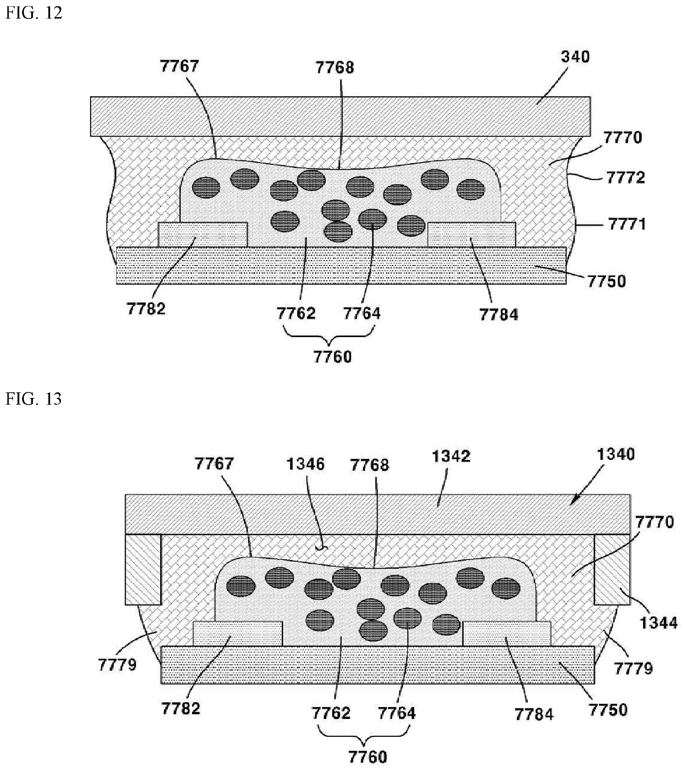

FIG. 12 is a cross-sectional view of a heating member according to a ninth embodiment of the present invention.

In the present embodiment, other parts are the same as those of the eighth embodiment, but there is a difference in a coupling structure between a protective layer **7770** and a substrate **7750**. Therefore, hereinafter, only characteristic parts of the present embodiment will be described, and for the remaining parts, the description according to the eighth embodiment will be cited.

Referring to FIG. 12, the heating member according to the present embodiment may include a substrate **7750**, electrodes **7782** and **7784**, a heating layer **7760**, and a protective layer **7770**.

In the present embodiment, the protective layer **7770** may be disposed to surround at least a portion of a side surface of the substrate **7750**. Accordingly, by increasing a contact area between the protective layer **7770** and the substrate **7750**, a phenomenon in which the substrate **7750** is peeled off from other configurations in the heating member may be prevented.

A cross-sectional area of the protective layer **7770** may be larger than a cross-sectional area of the substrate **7750**. At least one or more convex surfaces or concave surfaces may be formed on a side surface of the protective layer **7770** to connect a lower surface of the lens **340** and the side surface of the substrate **7750**. The convex surface and the concave surface may have a shape protruding further outward than other regions or a concave shape.

A lower end of the protective layer **7770** may be disposed on the side surface of the substrate **7760** disposed between an upper surface and a lower surface of the substrate **7760**.

FIG. 13 is a cross-sectional view of a heating member according to a tenth embodiment of the present invention.

In the present embodiment, other parts are the same as those of the ninth embodiment, but there is a difference in a coupling structure of a heating member according to a groove formed in a rear surface of the lens. Therefore, hereinafter, only characteristic parts of the present embodiment will be described, and for the remaining parts, the description according to the eighth embodiment will be cited.

Referring to FIG. 13, the heating member according to the present embodiment may include a substrate **7750**, electrodes **7782** and **7784**, a heating layer **7760**, and a protective layer **7770**.

The heating member may be coupled to the lens **1340**.

A groove **1346** having a shape concave upward more than other regions may be formed in a rear surface of the lens **1340** to which the heating member is coupled. In detail, the lens **1340** may include a lens body **1342** and an edge portion **1344** having a shape protruding further rearward than other regions from a rear edge of the lens body **1342**. The groove **1346** may be disposed inside the edge portion **1344**. The edge portion **1344** may be disposed to overlap at least a portion of the protective layer **7770** and the heating layer **7760** in a direction perpendicular to an optical axis direction. At least a portion of the protective layer **7770** or the heating layer **7760** may be coupled to the groove **1346**.

A portion of a side surface of the protective layer **7770** may be disposed to connect a lower surface of the edge portion **1344** and a side surface of the substrate **7750**. Accordingly, a phenomenon in which the substrate **7750** is peeled off from other configurations in the heating member may be prevented.

Hereinafter, a heating member according to an eleventh embodiment of the present invention will be described.

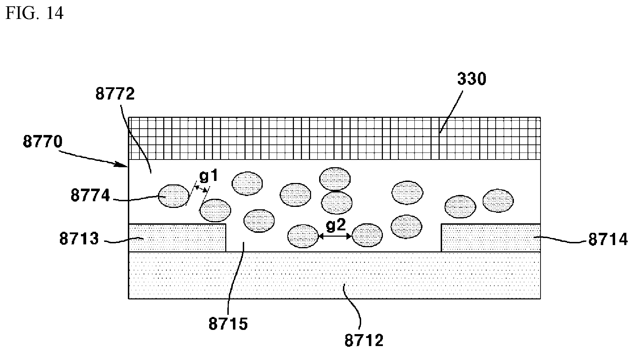

FIG. 14 is a cross-sectional view of a heating member according to an eleventh embodiment of the present invention.

As shown in FIG. 14, the heating member **8700** may include a base **8712**, electrodes **8712** and **8714**, and a heating layer **8770**.

The base **8712** is formed in a film shape, and the heating layer **8770** may be disposed on one surface thereof. Here, the one surface of the base **8712** on which the heating layer **8770** is formed may be a surface facing the lens **330**.

Electrodes **8713** and **8714** may be disposed on one surface of the base **8712** facing the lens **330**. The electrodes **8713** and **8714** may include a first electrode **8713** and a second electrode **8714**. Polarities of the first electrode **8713** and the second electrode **8714** may be opposite to each other. The first electrode **8713** and the second electrode **8714** may be disposed adjacent to one side surface and the other side surface of the base **8712**, respectively. Accordingly, a separation part **8715** may be formed between the first electrode **8713** and the second electrode **8714**. Based on a direction perpendicular to an optical axis direction, a length of the separation part **8715** may be smaller than a length of the base **8712**.

A material of the base **8712** may be polyimide (PI) or PET.

Based on the optical axis direction, a thickness of the base **8712** may be equal to or less than a thickness of the heating layer **8770**. Accordingly, heating efficiency through the heating layer **8770**, which will be described later, may be improved.

The heating layer **8770** may be disposed between the lens **330** and the base **8712**. According to an embodiment of the present invention, the heating layer **8770** may be an anisotropic conductive film (ACF). The anisotropic conductive film is implemented in a film shape by mixing conductive particles with a binder resin, and the heating layer **8770** may include a binder resin layer **8772** and conductive particles **8774** disposed in the binder resin layer **8772**. The heating layer **8770** may be manufactured by applying the conductive particles **8774** in the binder resin layer **8772** before curing and then curing the binder resin layer **8772** to which the conductive particles **8774** are applied.

The binder resin layer **8772** may be formed of a resin material having adhesiveness. A material of the binder resin layer **8772** may be epoxy. One surface of the binder resin layer **8772** may be in direct contact with a surface of the lens **330**, and the other surface thereof may be coupled to the base **8712**.

The conductive particles **8774** may be disposed in the binder resin layer **8772**. A resistance change of the conductive particles **8774** is made by providing power through the electrodes **8713** and **8714**, and accordingly, heat may be generated. In order to prevent an electrical short between a plurality of electrodes **8713** and **8714** through the conductive particles **8774**, an area density of the conductive particles **8774** per unit area of the binder resin layer **8772** may be 50% or less.

The conductive particles **8774** may be provided in plurality in the binder resin layer **8772**. A plurality of conductive particles **8774** adjacent to each other in the binder resin layer **8772** may have a separation region **g**. Based on a direction perpendicular to an optical axis direction, a separation distance **g2** between a plurality of conductive particles **8774** disposed between the plurality of electrodes **8713** and **8714** may be formed longer than a separation distance **g1** between a plurality of conductive particles **8774** disposed in other regions within the binder resin layer **8772**. Accordingly, an electrical short through the conductive particles **8774** in an arrangement region of the plurality of electrodes **8713** and **8714** may be more efficiently prevented.

Based on a direction perpendicular to an optical axis direction, the conductive particles **8774** may be disposed at a higher density in an edge region of the binder resin layer **8772** than in a central region of the binder resin layer **8772**.

By the plurality of electrodes **8713** and **8714**, a cross-sectional area of one surface of the heating layer **8770** coupled to the base **8712** may be smaller than a cross-sectional area of the other surface of the heating layer **8770** coupled to the lens **330**. Accordingly, there is an advantage in that heating efficiency of the lens **330** may be improved by increasing a contact area between the lens **330** and the heating layer **8770**.

A thickness of the plurality of electrodes **8713** and **8714** in an optical axis direction may be smaller than a thickness of the heating layer **8770** in the optical axis direction. The thickness of the plurality of electrodes **8713** and **8714** in the optical axis direction may be larger than a diameter of the conductive particles **8774**. Accordingly, heat transfer to a region between the plurality of electrodes **8713** may be more easily performed.

According to the structure described above, an adhesive function is provided to the heating layer itself, so that an adhesive layer for coupling between a heating member and a lens may be omitted compared to the related art. Therefore, there is an advantage in that heat may be more intensively provided to the lens.

In addition, there is an advantage in that heating efficiency may be improved by increasing the contact area between the heating layer and the lens.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A heating member comprising:
a substrate;
an electrode disposed on the substrate;
a heating layer disposed on the substrate and connected to the electrode, the heating layer including a polymer and conductive particles disposed in the polymer; and
a protective layer disposed on the heating layer and having adhesiveness.

2. The heating member according to claim 1,
wherein the electrode includes a plurality of electrodes spaced apart from each other in a horizontal direction, and
wherein the heating layer includes an upper heating layer portion disposed on the electrode, and a lower heating layer portion protruding downward from a lower surface of the upper heating layer portion and disposed between the plurality of electrodes.

3. The heating member according to claim 2,
wherein each of the plurality of electrodes includes at least a portion protruding from a side surface of the heating layer.

4. The heating member according to claim 3,
wherein the protective layer includes:
an upper surface portion disposed on the heating layer:
a central portion overlapping the upper heating layer portion in a horizontal direction; and
a lower surface portion overlapping the electrode in the horizontal direction.

5. The heating member according to claim 4,
wherein a thickness of the upper surface portion is equal to or less than a sum of a thickness of the central portion and a thickness of the lower surface portion.

6. The heating member according to claim 3,
wherein the electrode includes a first region overlapping the heating layer in an up-down direction, and a second region protruding from a side surface of the heating layer, and
wherein a length of the first region in a radial direction is longer than a length of the second region in the radial direction.

7. The heating member according to claim 6,
wherein a radial distance between the electrode and an inner surface or an outer surface of the substrate is greater than a radial length of the second region.

8. The heating member according to claim 6,
wherein a radial distance between the electrode and an inner surface or an outer surface of the substrate is less than a radial length of the second region.

9. The heating member according to claim 2,
wherein the heating layer includes a second lower heating layer portion protruding downward from a lower surface of the upper heating layer portion and disposed outside the plurality of electrodes.

10. A camera module comprising:
a first body;
a lens module disposed in the first body and including a barrel and a lens disposed in the barrel;
a substrate module disposed in the first body; and
a heating member having one end connected to a surface of the lens and the other end connected to the substrate module to provide heat to the lens,
wherein the heating member includes:
a substrate;
an electrode disposed on the substrate;
a heating layer disposed on the substrate and connected to the electrode, the heating layer including a polymer and conductive particles disposed in the polymer; and
a protective layer disposed on the heating layer, having adhesiveness, and coupled to the lens.
